Europäisches Patentamt

European Patent Office

Office européen des brevets

(19)

(11) Publication number: **0 067 023**
A2

# (12) EUROPEAN PATENT APPLICATION

(21) Application number: **82302798.2**

(22) Date of filing: **01.06.82**

(51) Int. Cl.³: **B 60 B 33/00**

(30) Priority: **04.06.81 GB 8117105**

(43) Date of publication of application: **15.12.82**
**Bulletin 82/50**

(84) Designated Contracting States: **DE FR NL SE**

(71) Applicant: **Martin-Thomas Limited, South Way Walworth Industrial Estate, Andover Hampshire (GB)**

(72) Inventor: **Pettitt, Stanley Julius, "Kenra" Station Road Chilbolton, Stockbridge Hampshire (GB)**

(74) Representative: **Marsh, Robin Geoffrey et al, Thorn EMI Patents Limited The Quadrangle Westmount Centre Uxbridge Road, Hayes Middlesex, UB4 0HB (GB)**

(54) Castors.

(57) A castor suitable for supporting a builders' staging allows support to be provided by either a wheel or a base plate resting on a ground level. Braking means permit the castor to be locked in either case.

The castor incorporates a wheel 10 mounted on an axle 11, which axle is connected to two plates 25, 26 depending on either side of the wheel from a support plate 24 mounted above the wheel. A leg member 35, rotably mounted to the support plate, connects to an upright 36 of a builders staging. A base plate 13 includes upstanding plates 14, 15 which are pivotally mounted to the axle, the base being capable of assuming a lower position whereby the base provides support, or of assuming an upper position whereby the wheel provides support. A braking lever 47 includes cam plates 41, 42 having cam slots to locate with the axle. Depression of the lever brings the wheel into firm contact with braking bar 40.

0067023

## CASTORS

This invention relates to castors incorporating braking means and particularly although not exclusively to castors for supporting builders' staging. Examples of such castors are described and shown in our prior patents nos. 1 449 292 and 882 617.

While these castors have been found to be very effective for mobile towers, some static structures may require the use of base plates especially if the structure is erected on sloping ground. At present either separate castor or base plate assemblies are used.

According to the present invention we provide a castor comprising a wheel, an axle extending through the wheel, brake means capable of applying a brake to the wheel, support means connected with the axle and disposed above the wheel to serve for connection to a load to be supported, chracterised in that there is included a rigid base connected with the axle and capable of rotation about the axle to assume, on the one hand a lower position whereby the base rests on a supporting medium, or on the other hand an upper position whereby the wheel rests on the supporting medium; the support means remaining above the wheel in both positions.

In one example the castor includes two plates on opposite sides of the wheel through which the axle passes to permit relative pivotal movement into said positions.

This example may be so constructed that the support means includes a plate disposed horizontally over the wheel and having depending brake plates on opposite sides of the wheel and each having a slot through which the axle passes, and the braking means includes a pair of cam plates having cam slots therein through which the axle passes, said cam plates projecting and being connected together to form a brake operating lever, said brake plates carrying a bar which can be moved to engage the wheel by actuation of said lever.

The invention will be further described by way of example with reference to the accompanying diagrammatic drawings wherein:-

Figure 1 is an elevational view of a castor made in accordance with the invention with the base plate seating on the ground.

Figure 2 is a view thereof with the wheel on the ground;

Figure 3 is a view at right angles to figure 1.

Figure 4 is an elevational view of a castor made in accordance with the invention with the base plate seating on sloping ground.

A wheel 10 is located rotatably on an axle 11. A base plate 13 rigidly carries two upstanding plates 14, 15 located on opposite sides of the wheel. The plates 14, 15 have slots 16 therein and the axle 11 is extended on both sides of the wheel to pass through the slots 16.

A bolt 20 passes through the axle 11 and receives nut 19.

A support plate 24 located horizontally above the wheel has two depending plates 25, 26 located on opposite sides of the wheel 10 and these plates are provided with slots through which the axle passes. A rotary plate 28 is mounted by ball bearings on the plate 24 and has a bolt 30 which passes through the plate 24 and a washer 31 and receives a nut 32 on its threaded end. The bolt 30 also passes through the base of a nut 34. A leg member 35 screws into the nut 34 and carries means to support an upright 36 of a builders' staging.

Braking means comprise a braking bar 40 carried by the plates 25, 26 and cam plates 41, 42 which have cam slots therein through which the axle 11 passes.   The cam plates 41, 42 have projections at 47 which are connected together by a bar 50 to form a brake actuating lever.

The slots in the plates 25, 26 and 41, 42 are made as described in the prior specifications so that by depressing the braking lever the wheel 10 is brought firmly into contact with the braking bar 40.

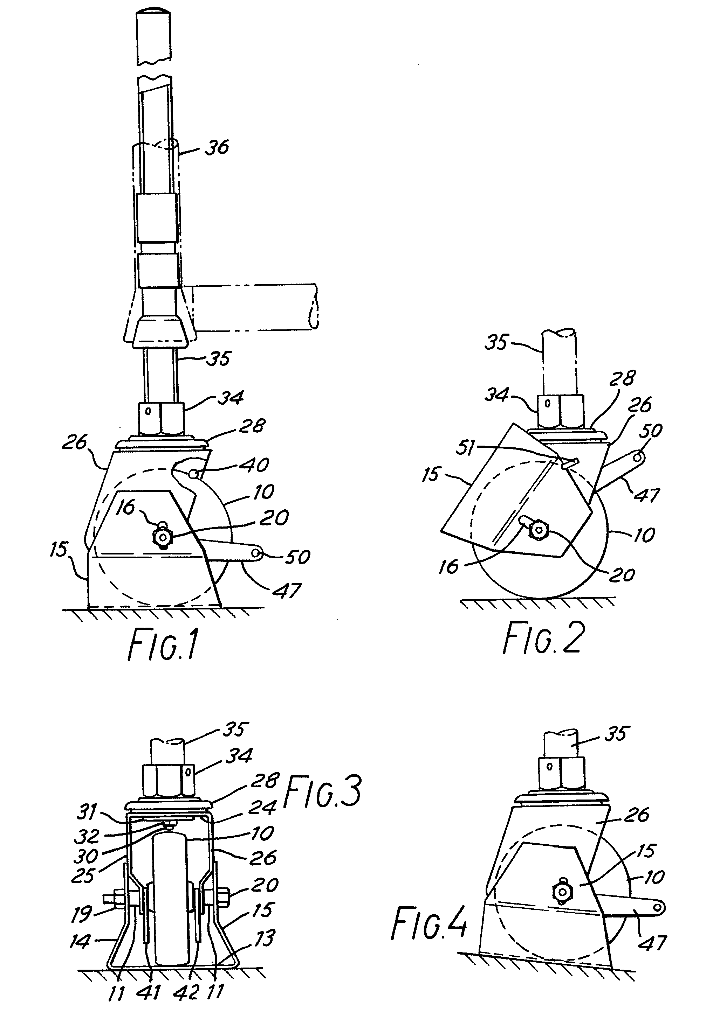

The base 13, 14, 15 can be moved relatively to the wheel and the plates 25, 26, 41, 42 to seat the base on the ground as in figures 1 and 3 or to bring the wheel on to the ground as shown in figure 2.   In the position shown in figure 2 the base may be held in its upper position by any suitable device 51.

An important feature of this invention is that in the braked position shown in figure 1 the braking bar 40 is firmly engaged on the wheel and the wheel is firmly engaged on the base plate 13 and in the position shown in figure 2 the braking bar 40 is firmly engaged on the wheel while the wheel is seated on the ground.

Another important feature is that as shown in figure 4 the invention allows for a structure to be erected on uneven ground.

: 4 :  0067023

## CLAIMS

1.    A castor comprising a wheel (10), an axle (11) extending through the wheel, brake means (47) capable of applying a brake to the wheel, support means (24) connected with the axle and disposed above the wheel to serve for connection to a load to be supported (36), characterised in that there is included a rigid base (13) connected with the axle (11) and capable of rotation about the axle to assume, on the one hand a lower position whereby the base rests on a supporting medium, or on the other hand an upper position whereby the wheel rests on the supporting medium; the support means (24) remaining above the wheel (10) in both positions.

2.    A castor according to claim 1, wherein there is included means (51) capable of holding the base in said upper position.

3.    A castor according to claim 1 or claim 2, wherein the base includes plate side members (14, 15) extending from the base and pivotally mounted to the axle.

4.    A castor according to any one of claims 1, 2 or 3, wherein the support means includes support plates (25, 26) extending from the support means and connected with the axle.

5.    A castor according to any preceding claim, wherein the brake means includes cam plates (41, 42) connected with the axle and pivotally mounted to said support plates (25, 26), the cam plates extending to form a brake operating lever (47), operation of the lever urging the wheel towards a braking bar (40) carried by said support plates

FIG.1

FIG.2

FIG.3

FIG.4